# FASCICULE DE BREVET EUROPEEN

(11) **EP 1 292 652 B1**
(45) Date de publication et mention de la délivrance du brevet: **25.08.2004**
(21) Numéro de dépôt: 01942925.7
(22) Date de dépôt: 21.06.2001
(51) Int. Cl.: C09K 21/14

(54) **BARRIERE DE PROTECTION**
SCHUTZBARRIERE
PROTECTIVE BARRIER

(30) Priorité: 21.06.2000 EP 00870138; 13.11.2000 EP 00870270
(43) Date de publication de la demande: 19.03.2003
(73) Titulaire: COMPAGNIE ROYALE ASTURIENNE DES MINES, SOCIETE ANONYME, 1040 Bruxelles (BE)
(72) Inventeur: MORMONT, Daniel, B-1420 Braine L'Alleud (BE); JACQUES, Alain, B-5100 Jambes (BE)
(74) Mandataire: Van Malderen, Joelle
(86) Numéro de dépôt international: PCT/BE2001/000107
(87) Numéro de publication internationale: WO 2001/098434

(56) Documents cités:
- EP-A- 0 012 566
- EP-A- 0 040 035
- EP-A- 0 373 137
- EP-A- 0 406 477
- EP-A- 0 949 367
- US-A- 3 618 753
- US-A- 3 840 393
- US-A- 4 222 802
- US-A- 4 239 998
- US-A- 4 514 466

## Description

### Objet de l'invention

La présente invention se rapporte à une barrière de protection anti-feu destinée à être appliquée du côté intérieur le long de structures métalliques ou composites telles que des carlingues d'avion ou des coques de bateau ou autres moyens de transport.

La présente invention se rapporte également aux véhicules tels l'avion, le navire, le train, etc. utilisant un tel type de barrière de protection antifeu.

### Arrière-plan technologique

Les structures métalliques et composites telles que les carlingues d'avion ou coques de bateau sont habituellement recouvertes du côté/interne d'une protection qui présente des caractéristiques de barrière thermique et acoustique afin d'isoler l'intérieur de la carlingue ou de la coque de l'environnement extérieur.

Dans ce but, on a proposé des protections qui se présentent habituellement sous la forme d'un mat constitué essentiellement d'une ou plusieurs couches en fibres de verre entouré d'une enveloppe. Cette enveloppe peut être réalisée en tout type de matériaux. De préférence, il s'agit d'un film en un matériau organique tel que polyester, polyimide ou autre, présentant au moins des caractéristiques hydrophobes et se comportant dans certains cas comme une barrière étanche à l'eau. A titre d'exemple, on peut citer comme matériau utilisé pour réaliser l'enveloppe le mylar® aluminisé ou non, le tedlar® qui est réalisé dans un film en PVF, le kapton® qui est un film réalisé en polyimide(marques enregistrées de Dupont), ou encore d'autres revêtements tels que les films polyester ou polyamide tel que le textril® qui est un film en polyester armé de fibres en polyéthylène, de la firme Jehier. Ces films constituant l'enveloppe doivent être réalisés dans des matériaux qui permettent les traitements textiles habituels : couture, collage, soudure, etc. et présentent des caractéristiques mécaniques telles que résistance aux déchirures, etc.

D'autre part, dans un souci de minimisation de poids, la densité de ces différents matériaux doit être aussi faible que possible tout en permettant d'atteindre des caractéristiques mécaniques élevées. De préférence, il convient que le poids par unité de surface de ce type de protection soit inférieur à 100 g/m².

Il convient absolument de protéger autant que possible les passagers présents à l'intérieur d'un avion du risque d'inflammation du combustible provenant en règle générale de moteurs extérieurs. En effet, ce combustible, tel le kérosène, lorsqu'il s'enflamme, atteint des températures nettement supérieures à 1000 °C. De ce fait, il convient de protéger les éléments de structures métalliques et composites constituant les carlingues d'avion, les coques de navire, les structures extérieures des trains, etc.

Dans ce but, les autorités et en particulier la FAA (Federal Aviation Administration) ont prévu des normes de protection antifeu relativement strictes. Cependant, les normes auxquelles les constructeurs d'avion doivent se soumettre évoluent continuellement et deviennent de plus en plus sévères dans un souci de sécurité accrue des voyageurs.

On observe aujourd'hui que les caractéristiques antifeu des protections décrites ci-dessus, et appartenant à l'état de la technique, sont devenues insuffisantes. Le département transport de la FAA s'est donc attaché à publier des critères de test adaptés aux nouvelles exigences. En particulier, les caractéristiques de résistance aux "burn through test" et "inflammability test" ont été redéfinies dans la norme 14 CFR part 25 et al. en septembre 2000.

En particulier, le test du "burn through" consiste à soumettre le matelas de fibres et son enveloppe à la flamme d'un brûleur. Ledit brûleur fournit une flamme d'attaque à une température d'environ 1150 °C. L'échantillon est ainsi soumis à un flux thermique de 149 kW/m². Le produit concerné satisfera les exigences requises de la FAA s'il parvient à résister à la pénétration de ladite flamme durant 4 minutes et que le flux de chaleur produit par l'échantillon est inférieur à 23 kw/m² mesuré à une distance de 30,5 cm (12 inches) de la surface d'attaque.

Le test d'inflammabilité (ASTM-E 648) qui consiste à soumettre un échantillon de 1000 mm de long et de 250 mm de large à un panneau radiant incliné de 30° face à l'échantillon et en présence d'une flamme pilote. Le panneau radiant produit un flux de chaleur de 18 kW/m² et l'allumage se fait via une flamme pilote. Les critères de satisfaction du test sont l'absence de flammes dans un rayon de 51 mm autour du point d'application et l'absence de postcombustion après l'extinction de la flamme pilote durant une période de test déterminée.

De même, les fabricants d'avions ont défini certaines spécifications mécaniques telles que souplesse et résistance à la traction, ainsi que leur variation, réalisés suite à un conditionnement ou vieillissement standardisé des échantillons.

D'autre part, on connaît par l'état de la technique, et en particulier par le document EP-A-0370337, l'utilisation d'un papier mica imprégné collé éventuellement sur un support à base de fibres, tissées ou non tissées de verre, d'aramide, de carbone ou autre comme revêtement antifeu à faible dégagement de chaleur pour des éléments de construction dans des applications présentant des normes relativement sévères en la matière telles que l'industrie aéronautique, l'industrie automobile, la décoration intérieure, etc.

Bien que ce type d'utilisation de papier mica répondait initialement aux normes en vigueur dans les années 1980 (ATS 10 333-001 directive FAR 25 - chambre O.S.U.) , ce type de revêtement ne répond plus aux nouvelles normes de sécurité telles que définies ci-dessus.

On connaît également, en particulier par les documents EP-A-0949367, FR-A-3 884 337, EP-A-0406467 et US-4 514 466, que le mica et en particulier le papier mica est un bon isolant électrique et possède une bonne résistance thermique. Néanmoins, ces documents ne mentionnent pas l'utilisation du mica pour une barrière de protection antifeu appliquée le long d'une structure métallique ou composite telle qu'une carlingue d'avion, une coque de bateau ou la structure extérieure d'un train, etc.

On remarque en outre que dans toutes les utilisations de l'état de la technique, le papier mica classique présente un poids par unité de surface proche de 100 g/m².

### Buts de l'invention

La présente invention vise à proposer un produit de protection qui présente au moins les mêmes caractéristiques d'isolation phonique et thermique que les produits de l'état de la technique ainsi qu'un comportement équivalent en tant que barrière anticondensation.

La présente invention vise en particulier à proposer un produit servant de barrière antifeu et qui satisfait aux nouvelles exigences de la FAA, c'est-à-dire qui répond aux normes définies par le règlement 14 CFR part 25.

Plus particulièrement, la présente invention vise à proposer un produit de protection qui présente un comportement satisfaisant au test de "burn through" et au test d'inflammabilité définis dans ce règlement.

La présente invention vise en outre à permettre des solutions qui augmentent le moins possible le poids du matériau final, c'est-à-dire qui permettent de prévoir une enveloppe présentant un poids total par unité de surface inférieur à 100 g/m².

### Principaux éléments caractéristiques de l'invention

La présente invention se rapporte à un produit de protection présentant des caractéristiques de barrière thermique et acoustique destiné à être appliqué le long de structures métalliques et composites telles que des carlingues d'avion, des coques de bateau ou des structures de train, se présentant essentiellement sous la forme d'un mat constitué d'une ou plusieurs couches de fibres, de préférence de fibres de verre, entourées d'une enveloppe, caractérisé en ce que l'enveloppe comprend au moins un premier support présentant des caractéristiques d'étanchéité à l'humidité et d'anticondensation, réalisé de préférence en un matériau organique, et un papier mica imprégné.

Selon une première forme d'exécution, l'enveloppe comprenant le papier mica et le premier support est réalisée sous la forme d'une seule couche dans laquelle le papier mica adhère directement au support.

Selon une seconde forme d'exécution, l'enveloppe se présente sous la forme d'un complexe multicouche comprenant d'une part le support présentant les caractéristiques requises d'étanchéité à l'humidité et d'anticondensation et d'autre part un papier mica, adhérant éventuellement à un second support propre.

Avantageusement, le papier mica est contrecollé à un second support propre, de préférence à un support tissu tel que la soie de verre ou un film.

De manière avantageuse, le premier support est un film ou un tissu.

De préférence, le papier mica présente un poids par unité de surface inférieur à 50 g/m², et de préférence inférieur à 30 g/m². De manière particulièrement préférée, le papier mica présente un poids par unité de surface inférieur à 25 g/m² et de préférence inférieur à 20 g/m².

Enfin, la présente invention se rapporte à une structure métallique ou composite telle qu'une carlingue d'avion, une coque de bateau ou la structure extérieure d'un train contre laquelle est appliqué le produit selon l'invention.

Il est particulièrement surprenant que l'utilisation de papier mica aussi mince, c'est-à-dire d'un poids par unité de surface inférieur à 50 g/m², présente des caractéristiques totalement satisfaisantes en répondant aux tests d'anti-inflammabilité et de "burn through".

Il est fort probable que la raison de ceci soit que, pour réaliser de tels papiers, il est nécessaire d'utiliser une pulpe de paillettes de mica dont 90% en volume auront une taille inférieur à 800 µm. De plus, ces paillettes auront de préférence un facteur de forme (c'est-à-dire le diamètre divisé par l'épaisseur) élevé, et de préférence un facteur de forme supérieur à 1000. Il convient de noter que le papier mica sera réalisé selon les techniques habituelles décrites dans l'état de la technique et imprégné de différents types de résine, par exemple de silicone.

### Description détaillée de l'invention

La présente invention sera décrite plus en détails en se référant aux exemples qui suivent. Dans ces exemples, on utilise chaque fois un "papier mica" réalisé selon les techniques classiques.

Par "papier mica", on entend une feuille réalisée selon les techniques habituelles de papeterie et qui comprend 100 % de mica sous forme de paillettes orientées. Habituellement, les paillettes sont soit de type phlogopite, soit de type muscovite calcinée ou non, ou encore sous la forma d'un mélange des deux, soit de type fluorphlogopite lorsque l'on utilise du mica synthétique.

La technique générale consiste à réduire des "scraps" de mica à l'état de paillettes (flakes), les "scraps" étant la forme physique sous laquelle le minerai de mica est extrait des mines. Ceci peut être effectué par exemple par une désintégration mécanique sous eau, et à traiter la pulpe ainsi obtenue sur une machine similaire aux machines de papeterie afin de fabriquer un papier mica. Actuellement, plusieurs types de papier mica sont commercialisés. Ceux-ci dépendent essentiellement de la nature du minerai. On connaît les papiers mica muscovite constitués exclusivement de minerai de mica de type muscovite calcinée ou non, le papier mica phlogopite constitué exclusivement de minerai de mica de type phlogopite ou encore les papiers mica réalisés à partir d'un mélange de différents minerais. Dans certains cas, on utilise en outre la vermiculite en adjonction à d'autres matières pour fabriquer du papier mica.

On connaît également l'utilisation de mica synthétique pour la création d'un papier mica.

Ce papier mica est utilisé comme matière première pour la fabrication de rubans, de feuilles, de stratifié (micanite). Habituellement, pour cela, le papier mica doit être imprégné par des liants organiques (résines) ou inorganiques et/ou collé sur un support souple mécaniquement résistant, afin de donner les propriétés physiques voulues au produit final.

Habituellement, le taux d'imprégnation des papiers mica en liants organiques, et en particulier en résines silicones, est compris entre 5 et 25 %.

L'originalité du papier mica utilisé selon la présente invention réside dans le fait que son poids par unité de surface est relativement peu élevé, et de préférence inférieur à 50 g/m².

D'autre part, on réalisera de manière classique un feutre de fibres de verre que l'on emballera dans une enveloppe constituée d'au moins un support textile et d'un papier mica selon la présente invention. L'enveloppe est dénommée ci-dessous le produit fini.

Selon une première forme d'exécution, ledit produit fini peut se présenter sous une forme multicouche, c'est-à-dire qu'il comprend de manière classique un film en un matériau organique présentant des caractéristiques hydrophobes et se comportant comme barrière étanche à l'eau et à la vapeur, et un papier mica éventuellement solidarisé à un support propre.

Selon une autre forme d'exécution, ledit produit fini peut se présenter sous une forme monocouche et être constitué d'un papier mica directement laminé sur un film présentant les caractéristiques hydrophobes requises.

### Exemple 1

On réalise un produit fini destiné à réaliser l'enveloppe comprenant un papier mica, un support textile et une résine. A cette fin, on utilise les constituants suivants :
- un papier mica de type Muscovite d'un poids par unité de surface de 25 g/m²,
- un tissu de verre d'un poids par unité de surface de 24 g/m² constitué de 26 fils/cm en chaîne et de 15 fils/cm en trame, le titre des fils étant de 5,5 tex en chaîne comme en trame, et
- une résine silicone de.type Phényl-Méthyl-Silicone comme par exemple la résine D.C. 805 de la société Dow Corning.

Le papier mica utilisé est constitué de paillettes de mica Muscovite et défini par la distribution des particules suivantes : 90% en volume ont une taille inférieure à 800 µm et 10% en volume ont une taille inférieure à 80 µm. De plus, leur facteur de forme sera supérieur à 1000. Les caractéristiques du papier mica sont les suivantes :
- poids par unité de surface : 25 g/m²
- épaisseur : 0,016 mm
- résistance à la traction : 4 N/cm
- porosité à l'air : 2200 s/100 cm³
- percement à l'huile : 4 s.

Pour réaliser le produit fini, on imprègne le tissu de fibres de verre au moyen d'une solution de résine silicone en milieu solvant toluène à 15 % de matière solide dissoute. Le papier mica est directement positionné sur le tissu de fibres de verre imprégné. Celui-ci absorbe dès lors une partie de la résine. Après évaporation du solvant dans des fours de séchage prévus à cet effet, on enroule le produit obtenu.

On réalise ainsi un produit constitué d'un papier mica contrecollé sur un tissu de fibres de verre.

Le produit fini a les caractéristiques suivantes :
- poids total : 60 g/m2
- épaisseur : 0,059 mm
- teneur en liant : 20 %
- teneur en volatiles : 0,2 %
- souplesse CEI : 9 N/m
- résistance à la traction : 104 N/cm
- rigidité diélectrique : 1,08 KV/couche.

Lorsque l'on soumet le produit aux tests de vieillissement correspondant à la spécification EADS Airbus, pour les matériaux destinés à répondre aux spécifications du test "burn through", on obtient après conditionnement à 70 °C / 98 % R.H. / 500 heures :
- variation de masse totale : - 0, 35 %
- variation de résistance à la traction : - 4 %

Ces valeurs sont largement inférieures aux limites spécifiées par EADS Airbus qui accepte une perte de ces mêmes propriétés allant jusque 10 %.

Ensuite, on soumet un échantillon à un test à la flamme tel que décrit ci-dessous :
- on conditionne trois échantillons du produit à température ambiante et 50 % d'humidité relative pendant minimum 24 heures,
- on fixe un échantillon de 18 cm x 18 cm par ses quatre côtés sur un cadre métallique d'un cm de largeur en laissant une surface carrée très légèrement tendue de 17 cm x 17 cm,
- on expose l'échantillon horizontalement à la flamme d'un bec bunsen avec une buselure d'un diamètre de 1 cm. La hauteur totale de la flamme doit être de 4 cm et l'échantillon doit être placé entre la limite oxydante et réductrice de la flamme. On obtient ainsi une température de contact de la flamme contre l'échantillon de 1100 °C,
- on applique la flamme contre l'échantillon durant 10 minutes, et
- on vérifie que la flamme ne traverse pas l'échantillon pendant toute la durée du test.

On applique la même méthode pour les trois échantillons. Si après les 10 minutes de test, aucun des échantillons tels que décrits dans cet exemple n'est traversé par la flamme, le produit remplit parfaitement son rôle de pare flamme. Même après avoir prolongé les essais de 30 minutes, le produit papier mica-tissu de fibres de verre n'est pas percé par la flamme.

Des essais "burn through" suivant la norme 14 CFR part 25 ont été réalisés sur un matelas isolant constitué de deux couches de fibres de verre, d'une barrière au feu constituée d'une feuille du produit mica-tissu de fibres de verre tel que décrit ci-dessus et d'une peau en Polyester renforcé. Après les 4 minutes requises pour le test, le mica n'a pas été perforé par la flamme et les flux de chaleur mesurés sont inférieurs à 0,8 W/cm² et sont donc restés bien inférieurs à la valeur maximale tolérée dans la spécification de la norme, qui est de 2 W/cm². Le produit répond donc à la norme 14 CFR part 25.

### Exemple 2

On réalise un produit fini destiné à réaliser l'enveloppe constitué d'un papier mica, d'un support, d'une résine et d'un adhésif. A cette fin, on utilise les matières suivantes :
- un papier mica de type Muscovite de 20 g/m²,
- un film de fluorure de polyvinyl (PVF) tel que le Tedlar® TFM05AL2 de Dupont de Nemours de 12,5 µ d'épaisseur et d'un poids de 18 g/m²,
- une résine silicone de type Méthyl-Silicone comme par exemple la résine Wacker K de la société Wacker, et
- un adhésif silicone de type PSA (Pressure Sensitive Adhesif) comme par exemple le type DC 280 A de la société Dow Corning.

Le papier mica utilisé est du même type que celui utilisé dans l'exemple 1 et a les caractéristiques suivantes :
- poids par unité de surface : 20 g/m²
- épaisseur : 0,014 mm
- résistance à la traction : 3 N/cm
- porosité à l'air : 2000 s/100 cm³
- percement à l'huile : 4 s.

Pour réaliser le produit fini, on procède en deux étapes :
1. une étape de renforcement du papier mica : pour cela on imprègne le papier mica avec une solution à 10 % de résine silicone K en milieu solvant et l'on obtient un papier mica renforcé avec 9 % de résine silicone sèche, et
2. une étape de contre collage pouvant être réalisée de façon avantageuse par deux techniques différentes :
   a. soit on enduit avec une solution à 14 % d'adhésif silicone 280A en milieu solvant, le papier mica préalablement renforcé. Après évaporation du solvant dans des fours de séchage, on contre colle un film PVF sur le mica enduit par l'adhésif silicone ;
   b. soit on enduit avec une solution à 5 % d'adhésif silicone 280A en milieu solvant le film PVF. Après évaporation du solvant dans des fours de séchage, on contre colle le papier mica préalablement renforcé sur le film PVF enduit par l'adhésif silicone.

On obtient ainsi un produit constitué d'un papier mica contrecollé sur un film PVF. Le produit fini a les caractéristiques suivantes :
- poids total : 48 g/m²
- épaisseur: 0,050 mm
- teneur en liant: 20 %
- teneur en volatils : 0,2 %

Les résultats des tests de vieillissement à l'humidité tels que spécifiés dans le premier exemple respectent les spécifications EADS.

Lors des essais à la flamme tels que décrits dans l'exemple 1, on obtient également un excellent résultat en ce sens que la flamme ne traverse pas le produit papier mica-film Tedlar® après les 10 minutes de test.

### Exemple 3

Une variante du produit est réalisée suivant la même méthode que celle décrite dans l'exemple 2 mais en remplaçant le film PVF Tedlar® par un film Polyester Mylar® de 6 µ provenant de la société Dupont de Nemours.

Les résultats obtenus sont comparables à ceux des exemples précédents.

### Exemple 4

Une autre méthode d'exécution consiste à coller le film sur le papier mica par points d'adhésif et non par un film continu d'adhésif. Pour cela, on utilise les techniques bien connues d'enduction comme par exemple l'enduction par cylindre gravé qui va permettre de déposer l'adhésif par points sur le support.

## Revendications

1. Produit de protection présentant des caractéristiques de barrière thermique et acoustique telles *qu'il satisfait aux exigences de la norme 14 CFR part 25 de la Fédéral Aviation Administration,* destiné à être appliqué le long de structures métalliques et composites telles que des carlingues d'avion, des coques de bateau ou les structures extérieures de trains ou d'autres moyens de locomotion, se présentant essentiellement sous la forme d'un «mat.» constitué d'une ou plusieurs couches de fibres, de préférence de fibres de verre, entouré d'une enveloppe, **caractérisé en ce que** l'enveloppe comprend au moins un premier support, de préférence en un matériau organique présentant des caractéristiques d'étanchéité et d'anticondensation, et un papier mica imprégné, le papier mica *présentant un poids par unité de surface inférieur à 50 g*/*m*^{*2*} *et comprenant des paillettes de mica ayant un facteur de forme supérieur à 1000.*

2. Produit selon la revendication 1, **caractérisé en ce que** l'enveloppe est monocouche.

3. Produit selon la revendication 2, **caractérisé en ce que** la monocouche de l'enveloppe est constituée du papier mica imprégné et du premier support adhérant directement au papier mica imprégné.

4. Produit selon la revendication 1, **caractérisé en ce que** l'enveloppe est multicouche.

5. Produit selon la revendication 4, **caractérisé en ce qu'**une première couche comprend le papier mica imprégné contrecollé à un second support propre constitué d'un film ou d'un tissu et la seconde couche est constituée du premier support.

6. Produit selon l'une quelconque des revendications précédentes, **caractérisé en ce que** le premier support est un film.

7. Produit selon l'une quelconque des revendications 1 à 5, **caractérisé en ce que** le premier support est un tissu.

8. Produit selon l'une quelconque des revendications précédentes, **caractérisé en ce que** le papier mica présente un poids par unité de surface inférieur à 25 g/m² et de préférence inférieur à 20 g/m².

9. Structure métallique ou composite telle qu'une carlingue d'avion, une coque de bateau ou la structure extérieure d'un train, contre laquelle est appliqué un produit selon l'une quelconque des revendications précédentes.

10. Utilisation du produit selon l'une .quelconque des revendications 1 à 8 pour le recouvrement d'une structure métallique ou composite de préférence extérieure d'un moyen de transport tel qu'un avion, un bateau, un train, un camion, etc.

## Patentansprüche

1. Schutzprodukt, das Merkmale einer Wärme- und Schallbarriere aufweist, *sodass es den Forderungen der Norm 14 CFR Teil 25 der Federal Aviation Administration erfüllt,* das dazu bestimmt ist, entlang Metall- und Verbundstoffstrukturen aufgetragen zu werden, wie zum Beispiel auf Flugzeugrümpfen, Schiffsrümpfen oder externen Strukturen von Zügen oder anderen Beförderungsmitteln, das im wesentlichen die Form einer "Matte" bestehend aus einer oder mehreren Faserschichten aufweist, vorzugsweise Glasfasern, umgeben von einem Mantel, **dadurch gekennzeichnet, dass** der Mantel mindestens einen ersten Träger, vorzugsweise einen organischen Werkstoff umfasst, der Dichtungs- und Kondensationsschutzmerkmale aufweist, und ein imprägniertes Glimmerpapier, wobei das Glimmerpapier *ein Gewicht pro Oberflächeneinheit kleiner als 50 g*/*m*^{*2*} *aufweist und Glimmerschuppen umfasst, die einen Formfaktor größer als 1000 aufweisen.*

2. Produkt nach Anspruch 1, **dadurch gekennzeichnet, dass** der Mantel einschichtig ist.

3. Produkt nach Anspruch 2, **dadurch gekennzeichnet, dass** die alleinige Schicht des Mantels aus einem imprägnierten Glimmerpapier und dem ersten Träger besteht, der direkt auf dem imprägnierten Glimmerpapier haftet.

4. Produkt nach Anspruch 1, **dadurch gekennzeichnet, dass** der Mantel vielschichtig ist.

5. Produkt nach Anspruch 4, **dadurch gekennzeichnet, dass** eine erste Schicht das imprägnierte Glimmerpapier umfasst, das gegen einen zweiten eigenen Träger geklebt wird, der aus einer Folie oder einem Stoff besteht, und dass die zweite Schicht aus dem ersten Träger besteht.

6. Produkt nach irgendeinem der vorhergehenden Ansprüche, **dadurch gekennzeichnet, dass** der erste Träger eine Folie ist.

7. Produkt nach irgendeinem der Ansprüche 1 bis 5, **dadurch gekennzeichnet, dass** der erste Träger ein Stoff ist.

8. Produkt nach irgendeinem der vorhergehenden Ansprüche, **dadurch gekennzeichnet, dass** das Glimmerpapier ein Gewicht pro Oberflächeneinheit kleiner als 25 g/m² und vorzugsweise kleiner als 20 g/m² aufweist.

9. Metall- oder Verbundstoffstruktur, wie zum Beispiel ein Flugzeugrumpf, ein Schiffsrumpf oder die äußere Struktur eines Zugs, gegen welche ein Produkt gemäß irgendeinem der vorhergehenden Ansprüche aufgetragen wird.

10. Verwendung des Produkts nach irgendeinem der Ansprüche 1 bis 8 zum Abdecken einer Metall- oder Verbundstoffstruktur, vorzugsweise einer äußeren Struktur eines Transportmittels, wie zum Beispiel eines Flugzeugs, eines Schiffs, eines Zugs, eines Lastkraftwagens, usw.

## Claims

1. Protection product having thermal and acoustic barrier characteristics such that it satisfies the requirements of the standard 14 CFR, part 25 issued by the Federal Aviation Administration, which is designed to be applied along metallic and composite structures, such as aircraft cockpits, boat hulls or the outside structures of trains or of other means of transport, essentially in the form of a "mat" consisting of one or several fibre layers, preferably glass fibres, enclosed in a sheath, **characterised in that** the sheath comprises at least one first support, preferably made of an organic material having sealing and anticondensation characteristics, and an impregnated mica paper, the mica paper having a weight per unit area of less than 50 g/m² and comprising flakes of mica with a form factor greater than 1000.

2. Product according to claim 1, **characterised in that** the sheath is a single-layer sheath.

3. Product according to claim 2, **characterised in that** the single layer of the sheath consists of the impregnated mica paper and of the first support adhering directly to the impregnated mica paper.

4. Product according to claim 1, **characterised in that** the sheath is a multi-layer sheath.

5. Product according to claim 4, **characterised in that** a first layer comprises the impregnated mica paper laminated onto a second, own support consisting of a film or of a fabric, and the second layer consists of the first support.

6. Product according to any of the preceding claims, **characterised in that** the first support is a film.

7. Product according to any of claims 1 to 5, **characterised in that** the first support is a fabric.

8. Product according to any of the preceding claims, **characterised in that** the weight of the mica paper per unit area is less than 25 g/m² and preferably less than 20 g/m².

9. Metallic or composite structure such as an aircraft cockpit, a boat hull or the outside structure of a train, to which a product according to any of the preceding claims is applied.

10. Use of the product according to any of claims 1 to 8 for covering a, preferably outside, metallic or composite structure of a means of transport such as an aircraft, a boat, a train, a truck, etc.
